(19) Europäisches Patentamt
European Patent Office
Office européen des brevets

(11) EP 2 014 884 A1

(12) DEMANDE DE BREVET EUROPEEN

(43) Date de publication:
**14.01.2009 Bulletin 2009/03**

(51) Int Cl.:
***F01N 3/023*** *(2006.01)* ***F01N 9/00*** *(2006.01)*

(21) Numéro de dépôt: **08300232.9**

(22) Date de dépôt: **07.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **09.07.2007 FR 0704946**

(71) Demandeur: **Renault SAS**
**92100 Boulogne Billancourt (FR)**

(72) Inventeurs:
- **Lombaert, Karine**
**78114 Magny les Hameaux (FR)**
- **Guy-Bouyssou, Delphine**
**91670 Angerville (FR)**

(54) **Evaluation du chargement d'un filtre a particules**

(57) Procédé d'estimation de la quantité massique de particules de suies accumulées dans un filtre à particules (2) pour régénérer le filtre à particules, caractérisé en ce qu'il comporte les étapes suivantes :
- mesure de la masse totale de suies ($Q_{ec}$) entrant dans le filtre à particules ;
- mesure de la masse de NO2 ($M_{NO2}$) entrant dans le filtre à particules ;
- détermination de la masse de suies ($M_{1ec}$) réagissant par une réaction de régénération passive avec le NO2 entrant ;
-déduction par soustraction de la masse de suies ($M_{2ec}$) qui s'accumule dans le filtre à particules $M_{2ec} = M_{ec} - M_{1ec}$.

Fig.1a

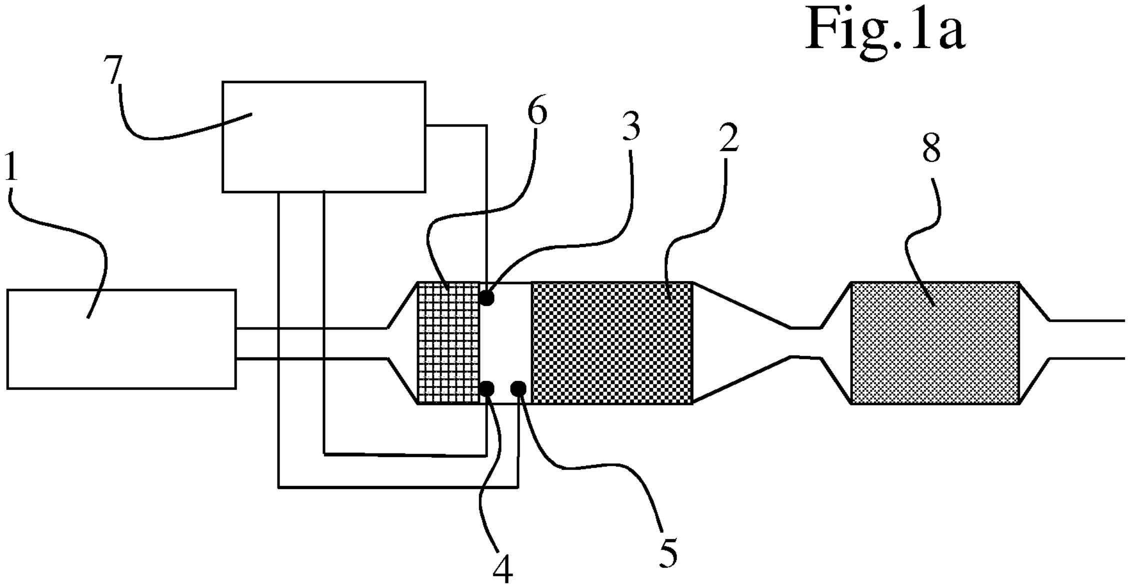


EP 2 014 884 A1

Fig.1b

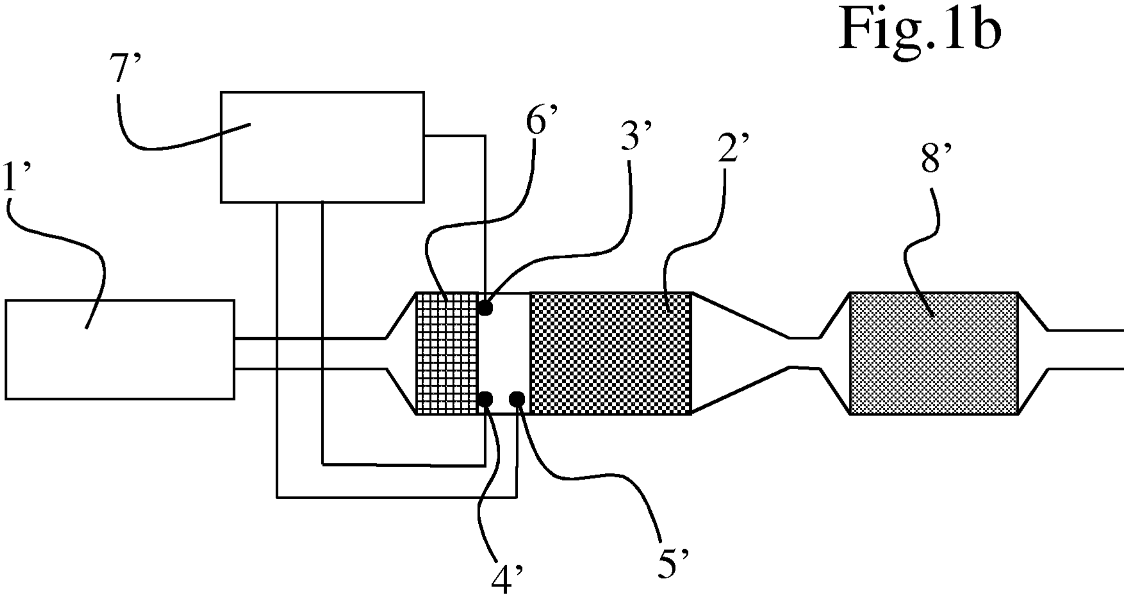


Fig.1c

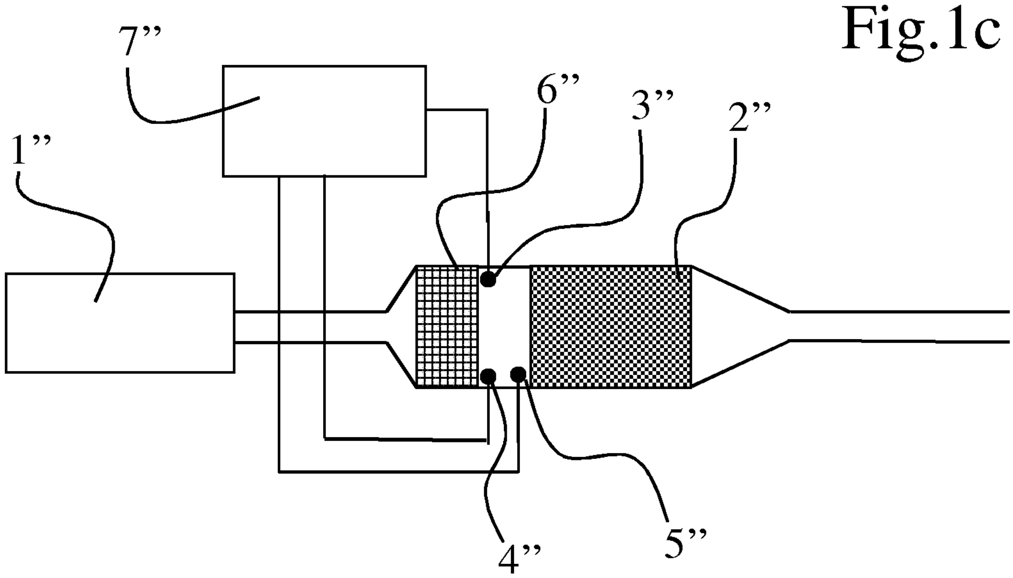

## Description

L'invention concerne un procédé d'estimation de la quantité massique de particules de suies accumulées dans un filtre à particules pour régénérer le filtre à particules ainsi que le dispositif associé. L'invention est particulièrement adaptée aux véhicules automobiles équipés d'un moteur diesel.

Les moteurs à combustion interne, et plus particulièrement les moteurs de type diesel, rejettent dans l'atmosphère des particules polluantes dont il convient de diminuer la quantité massique. Ces particules, qui sont constituées de suies produites lors d'une combustion imparfaite dans le moteur, peuvent être piégées dans les gaz d'échappement par l'implantation d'un filtre à particules dans la ligne d'échappement en aval des chambres de combustion du moteur. Un tel filtre est conçu de façon à pouvoir retenir les particules se trouvant dans les gaz d'échappement qui traversent le filtre. Au fur et à mesure de l'utilisation du moteur, les particules s'accumulent dans le filtre et finissent par entraîner une contre-pression importante à l'échappement du moteur, ainsi qu'une augmentation de la pression différentielle aux bornes du filtre à particules, ce qui diminue considérablement les performances du moteur.

Afin de rétablir les performances du moteur, on sait pratiquer une régénération du filtre par combustion des particules qui s'y sont accumulées. Cette opération de combustion est rendue possible par une élévation de la température interne du filtre à particules par augmentation de la thermique des gaz d'échappement. Pour ce faire, on procède généralement à une injection retardée de carburant dans les chambres de combustion du moteur. On peut en particulier injecter du carburant juste après le point mort haut lors de la phase de détente, ce qui a pour effet d'augmenter la température des gaz à l'échappement.

Il est également possible de prévoir une ou plusieurs injections tardives, c'est-à-dire nettement après le point mort haut ou une introduction de carburant directement dans la ligne d'échappement via l'utilisation d'un 5$^{ème}$ injecteur ou d'un vaporisateur à l'échappement. Le carburant ainsi injecté ne brûle pas dans la chambre de combustion du moteur, mais, par exemple, dans un dispositif catalytique également prévu dans la ligne d'échappement, augmentant ainsi la température des gaz traversant ensuite le filtre à particules.

Le filtre à particules est en effet généralement associé à un dispositif catalyseur monté en amont du filtre, de façon à diminuer les émissions polluantes. Le dispositif catalytique peut être intégré dans le filtre à particules lui-même, qui peut alors comprendre un matériau catalytique, tel que du platine. Les hydrocarbures imbrûlés et l'oxyde de carbone provenant des injections retardées et des injections tardives dans les chambres de combustion peuvent s'oxyder sur le matériau catalytique en augmentant la température au sein du filtre à particules.

La régénération du filtre à particules peut être faite périodiquement au cours de phases de régénération, dès que la masse de particules dans le filtre devient trop importante. Les phases de régénération s'effectuent lorsque le moteur fonctionne, sans que le conducteur du véhicule en ait conscience. Classiquement, les filtres à particules fonctionnent donc de manière périodique, en deux phases. Lors d'une première phase, le filtre stocke des particules émises par le moteur, et lors d'une deuxième phase, les particules stockées dans le filtre sont brûlées afin de régénérer le filtre.

Dans l'état de la technique, la gestion des filtres à particules repose sur des systèmes d'estimation de la quantité massique de particules présentes dans le filtre à particules à partir de la contre-pression à l'échappement ou à partir de la différence de pression, appelée également pression différentielle, aux bornes du filtres à particules. La régénération est déclenchée en fonction de cette estimation.

Par exemple, le document FR 2 781 251 porte sur un procédé de détermination du chargement en suies d'un filtre à particules monté en aval d'un moteur à combustion interne. Le filtre est régénéré périodiquement par combustion des suies avant d'atteindre un chargement trop élevé. Le chargement est déduit de la pression différentielle aux bornes du filtre et d'une grandeur représentative de l'écoulement des gaz dans le moteur.

De même, le document EP 1 281 843 décrit un procédé de détermination du chargement en suies d'un filtre à particules, monté en aval d'un moteur à combustion interne. Le filtre est régénéré périodiquement par combustion des suies avant d'atteindre un chargement trop élevé. Le chargement est déduit de la pression différentielle aux bornes du filtre et d'une grandeur représentative des gaz traversant le filtre à particules.

Le document FR2877393 décrit une solution tenant de plus compte de la réaction chimique dite de régénération passive: NO2 + C > CO + NO. Cette réaction s'effectue à une température correspondant à un roulage extra-urbain du véhicule (350 à 500 C en amont du filtre à particules). Elle fait fortement chuter la pression aux bornes du filtre à particules, sans qu'une masse de particules soit réellement brûlée. Une telle chute de pression différentielle aux bornes du filtre entraîne une imprécision de l'estimation du chargement du filtre, ce qui peut entraîner une casse du filtre à particules. En effet, la masse de suies estimée est inférieure à la masse de suies réelle, et lors d'une régénération par combustion du filtre, un emballement de la réaction de combustion peut avoir lieu, et provoquer la casse du filtre à particules. Ainsi, ce document utilise un modèle de chargement en particules du filtre selon les conditions du moteur. Toutefois, cette solution est complexe sans atteindre un résultat satisfaisant.

Chaque régénération du filtre à particules induit une augmentation de la consommation en carburant et peut également réduire l'intervalle de vidange du lubrifiant à cause du phénomène de dilution de carburant dans le lubrifiant si l'exotherme nécessaire à la régénération est généré par une injection tardive de carburant dans le cycle moteur.

Le déclenchement de la régénération du filtre à particules s'effectue dans certains cas de façon prématurée compte tenu des incertitudes du modèle et de conditions particulières qui ne sont pas prises en compte dans la gestion de la régénération du filtre à particules. Compte tenu des contraintes environnementales, il est absolument nécessaire de déclencher la régénération du filtre à particules uniquement lorsque cela est nécessaire.
L'objet de l'invention est donc d'améliorer la gestion du filtre à particules.
L'invention repose sur une estimation au plus juste de la quantité massique de suies stockées dans le filtre à particules afin de régénérer le filtre à particules uniquement lorsque cela est nécessaire, en tenant notamment mieux compte des effets de la réaction chimique de régénération passive.
Pour cela, l'invention mesure non seulement la quantité massique de particules totale qui rentrent dans le filtre mais également la quantité massique de NO2 présente dans les gaz d'échappement, responsable de la régénération passive des particules.
L'invention repose sur un procédé d'estimation de la quantité massique de particules de suies accumulées dans un filtre à particules pour régénérer le filtre à particules, caractérisé en ce qu'il comporte les étapes suivantes :

- mesure de la masse totale de suies $M_{ec}$ entrant dans le filtre à particules ;
- mesure de la masse de NO2 entrant dans le filtre à particules ;
- détermination de la masse de suies $M_{1ec}$ réagissant par une réaction de régénération passive avec le NO2 entrant ;
- déduction par soustraction de la masse de suies $M_{2ec}$ qui s'accumule dans le filtre à particules $M_{2ec} = M_{ec} - M_{1ec}$.

La masse de suies réagissant dans la réaction de régénération passive avec le NO2 entrant peut être considérée égale à la masse de NO2 entrant dans le filtre à particules.
Le procédé peut en outre comporter l'étape supplémentaire suivante :

- détermination de la température des gaz d'échappement en entrée du filtre à particules.

Il peut aussi comporter l'étape supplémentaire suivante :

- estimation de la teneur en résidus du filtre à particules.

Enfin, le procédé peut comporter les étapes suivantes :

- mesure de la contre pression à l'échappement dès la fin du procédé de régénération active ;
- comparaison avec la contre pression initiale obtenue avec un filtre à particules à l'état neuf.

L'invention porte aussi sur un dispositif de diminution de la pollution des gaz d'échappement d'un véhicule automobile, comprenant un filtre à particules et une unité de gestion de ce filtre à particules, pour décider du fonctionnement du filtre à particules selon deux phases, une première phase durant laquelle le filtre stocke des particules émises par le moteur, et une deuxième phase durant laquelle les particules stockées dans le filtre sont brûlées afin de régénérer le filtre, caractérisé en ce qu'il comprend un premier moyen de mesure de la masse totale de suies entrant dans le filtre à particules et un second moyen de mesure de la masse de NO2 entrant dans le filtre à particules.
Le premier moyen de mesure de la masse totale de suies peut être un premier capteur de particules et le second moyen de mesure de la masse de NO2 peut être un second capteur Nox placés en amont du filtre à particules.
Le dispositif peut aussi comprendre un moyen de mesure de la température des gaz d'échappement en entrée du filtre à particules.
Il peut aussi comprendre un moyen de mesure de la contre pression ou de la pression différentielle au niveau du filtre à particules.
Enfin, l'invention porte sur l'utilisation dans un véhicule automobile d'un dispositif tel que décrit précédemment pour régénérer un filtre à particules.
Ces objets, caractéristiques et avantages de la présente invention seront exposés en détail dans la description suivante d'un mode d'exécution particulier fait à titre non-limitatif en relation avec les figures jointes parmi lesquelles :

Les figures 1a à 1c représentent plusieurs variantes d'un dispositif une selon un mode d'exécution de l'invention ;
la figure 2 représente la vitesse de combustion des suies en fonction de la concentration en $NO_2$ ;
la figure 3 représente le pourcentage d'efficacité de la régénération passive en fonction de la masse de résidus.

L'invention repose sur la prise en compte de la masse de particules de suies qui pénètrent dans le filtre à particules et de la teneur en NO2 contenu dans les gaz d'échappement.
Pour cela, un dispositif d'implémentation de ce principe est illustré sur les différentes variantes des figures 1a à 1c, sur lesquelles un premier capteur de particules 3, 3', 3" et un second capteur Nox 4, 4', 4" sont placés en amont du filtre à particules 2, 2', 2". Ces éléments se trouvent tous sur la voie d'échappement d'un moteur 1, 1',1". Ces capteurs transmettent leur mesure à une unité de gestion 7, 7', 7" du dispositif qui met en oeuvre le procédé de gestion qui sera décrit ci-après et commande la phase de régénération du filtre à particules 2, 2', 2" quand cela est nécessaire. Cette unité de contrôle comprend notamment un calculateur et au moins une mémoire. Sur la figure 1a, un catalyseur d'oxydation 6 et un système de traitement des NOx 8 sont de plus positionnés sur la voie des gaz d'échappement. Sur la variante de la figure 1b, un piège à Nox 6' et un système de traitement des NOx 8', et sur la figure 1c, seul un piège à Nox 6", sont associés au filtre à particules 2, 2', 2", qui peut être ou non catalysé.

Le premier capteur 3, 3',3" permet de déterminer la masse entrante de particules de suies $M_{ec}$ et le second capteur 4, 4', 4" la masse entrante $M_{NO2}$ de NO2. Ces deux informations essentielles sont communiquées à l'unité de gestion 7, 7', 7".

La réaction de régénération passive permet de transformer une partie $M_{1ec}$ de la masse entrante $M_{ec}$ de particules de suies dans le filtre à particules 2, 2', 2" en CO2, NO et N2 de la manière suivante :

$$M_{1ec}+M_{NO2}=>M_{CO2}+M_{NO}+M_{N2}$$

La quantité massique de suies $M_{2ec}$ qui s'accumule dans le filtre à particules 2, 2', 2" s'obtient donc à partir de l'équation suivante :

$$M_{ec}=M_{1ec}+M_{2ec}$$

Avantageusement, le procédé de l'invention tient de plus compte de la température des gaz d'échappement en entrée du filtre à particules. Pour cela, la température peut soit être estimée via un modèle, soit mesurée via un thermocouple 5, 5', 5" placé en amont du système ou encore intégré dans le capteur NOx ou le capteur de particules. En effet, la vitesse de la réaction de régénération passive dans le filtre à particule 2, 2', 2" est fonction de la température et ses valeurs sont illustrées sur la courbe de la figure 2. La valeur de masse de suies $M_{1ec}$ participant à la régénération passive sera donc affinée en tenant compte de la température de cette réaction.

De plus, il sera aussi avantageux de tenir compte de la présence de résidus dans le filtre à particules, qui augmentent au cours du vieillissement du filtre, ces résidus ayant aussi une influence sur la réaction de régénération passive comme l'illustre la figure 3 qui représente en ordonnée l'efficacité de la régénération en fonction de la masse de résidus en abscisse. Les résidus consistent en des substances qui ne sont pas brûlées lors de la régénération du filtre et s'accumulent ainsi dans le filtre à particules. Lorsque leur masse augmente, l'efficacité de la réaction de régénération passive diminue. Ce phénomène de génération de résidus dépend notamment de la nature du lubrifiant et du carburant utilisé. Ces résidus contribuent à une augmentation de la contre pression à l'échappement (CPE) au cours de l'utilisation du filtre à particules. En effet, après la régénération active provoquée par un exotherme dans la ligne d'échappement, on ne retrouvera pas la contre pression initiale obtenue avec un filtre à l'état neuf. Le procédé d'estimation de suies dans le filtre à particules pourra donc tenir compte d'une estimation de la teneur en résidus par la mesure de la contre pression à l'échappement dès la fin du procédé de régénération active. La courbe de la figure 3 permettra ensuite d'en déduire l'efficacité de la réaction de régénération passive puis d'appliquer ce coefficient pour la détermination de la valeur $Q_{1ec}$.

Finalement, la masse de suies résiduelles $M_{2ec}$ qui sera stockée dans le filtre à particules et qui par conséquent devra être détruite lors des phases de régénération du filtre à particule sera alors :

$$M_{2ec} = M_{ec} - M_{1ec}.$$

Bien entendu, ce procédé de calcul sera mis en oeuvre en permanence quand le véhicule automobile fonctionne afin de connaître la masse totale de suies accumulées à tout instant.

Le dispositif de l'invention a été illustré avec des capteurs mais en variante, on peut également utiliser un équipement de laboratoire, par exemple une baie d'analyse, TEOM (Tapered Element Oscillating Microbalance), non-embarquable afin de déterminer la teneur en $NO_2$ et la masse de particules. Cette détection s'applique sur des systèmes stationnaires. Par exemple, cet équipement pourrait être utilisé en après-vente.

Le dispositif pourra aussi être corrélé avec les autres procédés d'estimation existants comme ceux basés sur un modèle de chargement du filtre à particules en fonction des émissions en particules du moteur et/ou basés sur la mesure de la contre pression dans la ligne d'échappement.

Cette application est destinée à contrôler le chargement en particules d'un filtre à particules qui peut être implanté sur tous les véhicules à moteur essence ou diesel.

La solution décrite atteint ainsi les objets recherchés et présente les avantages supplémentaires suivants :

- d'affiner la vitesse de chargement du filtre à particules ;
- de déclencher la régénération du filtre à particules au moment le plus opportun ;
- de diminuer la surconsommation de carburant par rapport au système actuel ;
- d'augmenter l'intervalle de vidange du lubrifiant par rapport au système actuel.

## Revendications

1. Procédé d'estimation de la quantité massique de particules de suies accumulées dans un filtre à particules pour régénérer le filtre à particules, **caractérisé en ce qu'**il comporte les étapes suivantes :

   - mesure de la masse totale de suies ($M_{ec}$) entrant dans le filtre à particules ;
   - mesure de la masse de NO2 ($M_{NO2}$) entrant dans le filtre à particules ;
   - détermination de la masse de suies ($M_{1ec}$) réagissant par une réaction de régénération passive avec le NO2 entrant ;
   - déduction par soustraction de la masse de suies ($M_{2ec}$) qui s'accumule dans le filtre à particules $M_{2ec} = M_{ec} - M_{1ec}$.

2. Procédé selon la revendication 1, **caractérisé en ce que** la masse de suies ($M_{1ec}$) réagissant dans la réaction de régénération passive avec le NO2 entrant est considérée égale à la masse de NO2 ($M_{NO2}$) entrant dans le filtre à particules.

3. Procédé selon la revendication 1, **caractérisé en ce qu'**il comporte l'étape supplémentaire suivante :

   - détermination de la température des gaz d'échappement en entrée du filtre à particules.

4. Procédé selon l'une des revendications précédentes, **caractérisé en ce qu'**il comporte l'étape supplémentaire suivante :

   - estimation de la teneur en résidus du filtre à particules.

5. Procédé selon la revendication précédente, **caractérisé en ce qu'**il comporte les étapes suivantes :

   - mesure de la contre pression à l'échappement dès la fin du procédé de régénération active ;
   - comparaison avec la contre pression initiale obtenue avec un filtre à particules à l'état neuf.

6. Dispositif de diminution de la pollution des gaz d'échappement d'un véhicule automobile, comprenant un filtre à particules (2 ; 2' ; 2") et une unité de gestion (7 ; 7' ; 7") de ce filtre à particules, pour décider du fonctionnement du filtre à particules (2 ; 2' ; 2") selon deux phases, une première phase durant laquelle le filtre stocke des particules émises par le moteur, et une deuxième phase durant laquelle les particules stockées dans le filtre sont brûlées afin de régénérer le filtre, **caractérisé en ce qu'**il comprend un premier moyen (3 ; 3' ; 3") de mesure de la masse totale de suies ($M_{ec}$) entrant dans le filtre à particules et un second moyen (4 ; 4' ; 4") de mesure de la masse de NO2 ($M_{NO2}$) entrant dans le filtre à particules (2 ; 2' ; 2") et **en ce que** l'unité de gestion (7 ; 7' ; 7") détermine la masse de suies ($M_{1ec}$) réagissant par une réaction de régénération passive avec la masse de NO2 mesurée et déduit par soustraction la masse de suies ($M_{2ec}$) qui s'accumule dans le filtre à particules par la formule $M_{2ec} = Mec - M_{1ec}$.

7. Dispositif de diminution de la pollution des gaz d'échappement d'un véhicule automobile selon la revendication précédente, **caractérisé en ce que** le premier moyen (3 ; 3' ; 3") de mesure de la masse totale de suies ($M_{ec}$) est un premier capteur de particules et **en ce que** le second moyen (4 ; 4' ; 4") de mesure de la masse de NO2 ($M_{NO2}$) est un second capteur Nox placés en amont du filtre à particules.

8. Dispositif de diminution de la pollution des gaz d'échappement d'un véhicule automobile selon l'une des revendications 6 à 7, **caractérisé en ce qu'**il comprend un moyen (5 ; 5' ; 5") de mesure de la température des gaz d'échappement en entrée du filtre à particules.

9. Dispositif de diminution de la pollution des gaz d'échappement d'un véhicule automobile selon l'une des revendications 6 à 8, **caractérisé en ce qu'**il comprend un moyen de mesure de la contre pression ou de la pression différentielle au niveau du filtre à particules.

**10.** Utilisation dans un véhicule automobile d'un dispositif selon une des revendications 6 à 9 pour régénérer un filtre à particules.

Fig.1a

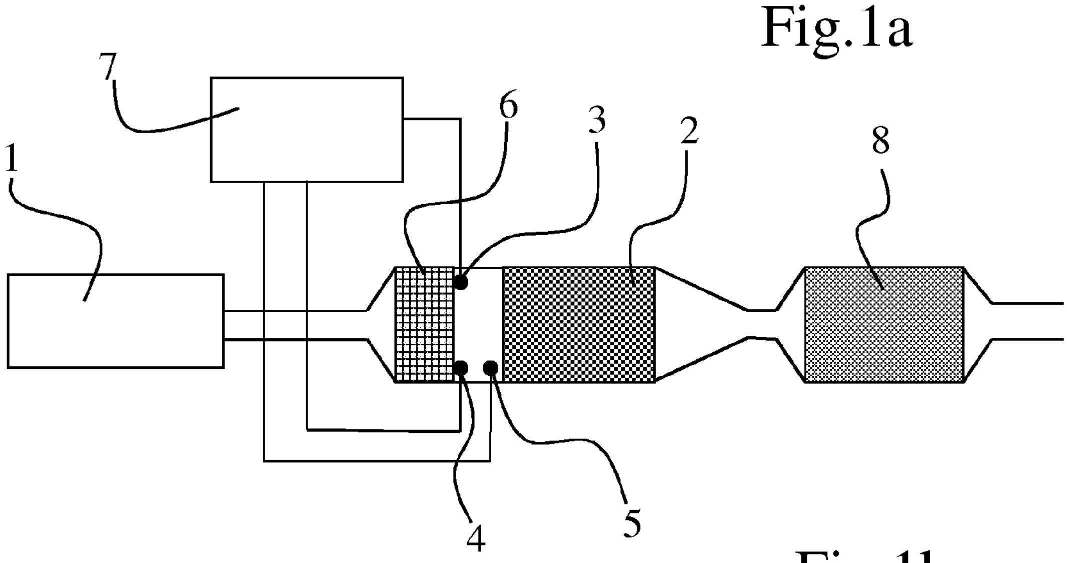


Fig.1b

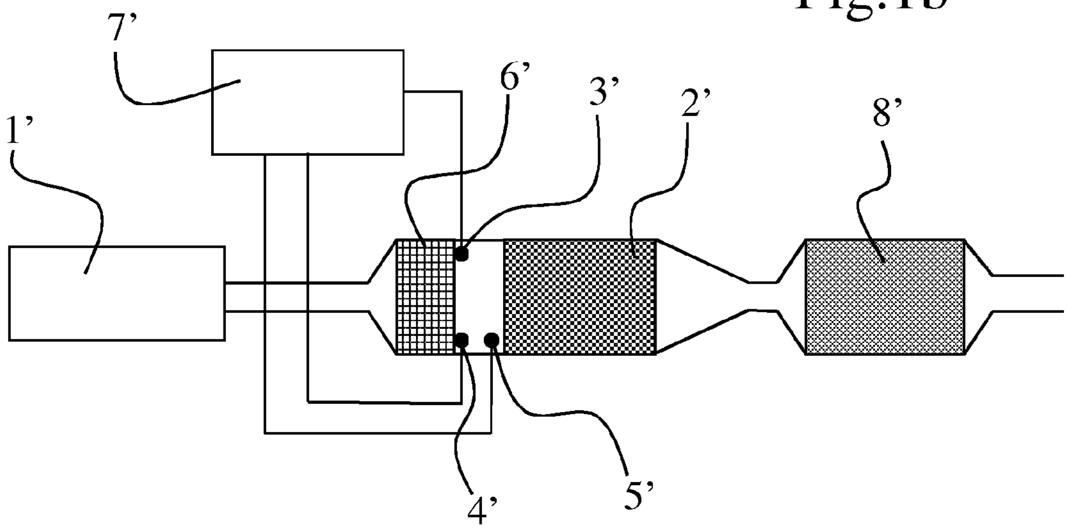


Fig.1c

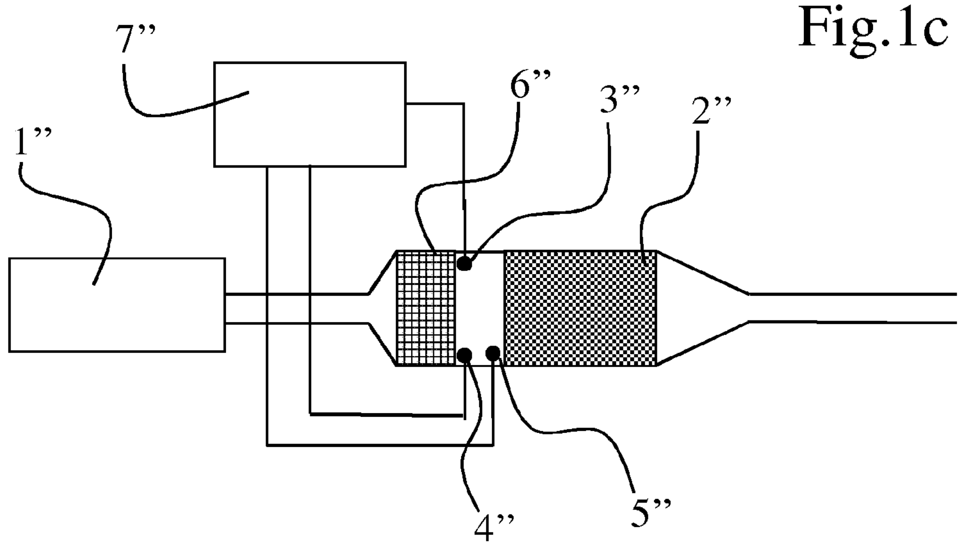

Fig.2

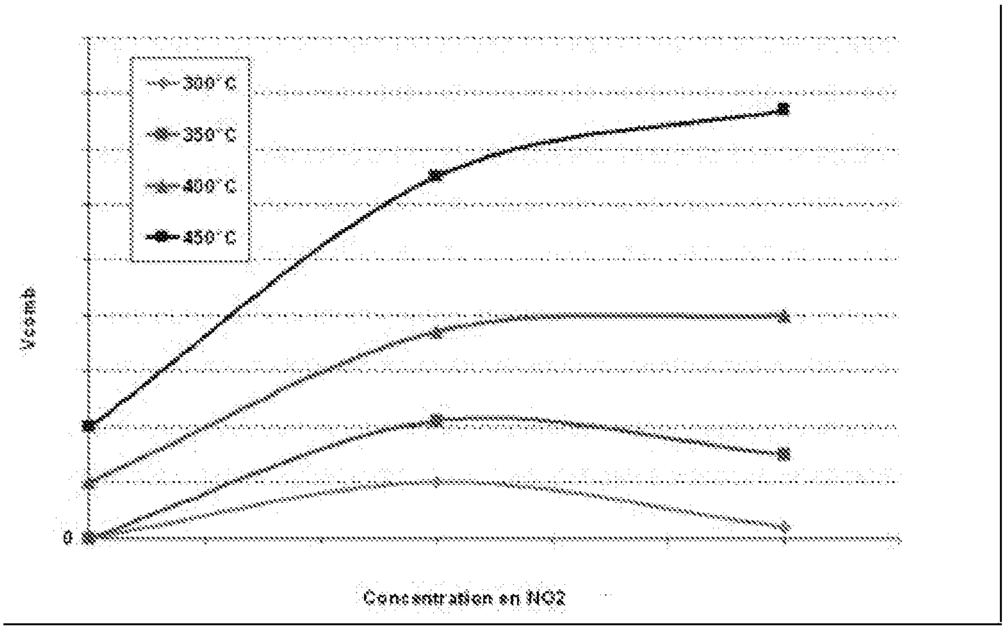
300°C
350°C
400°C
450°C
Vcomb
0
Concentration en NO2

Fig.3

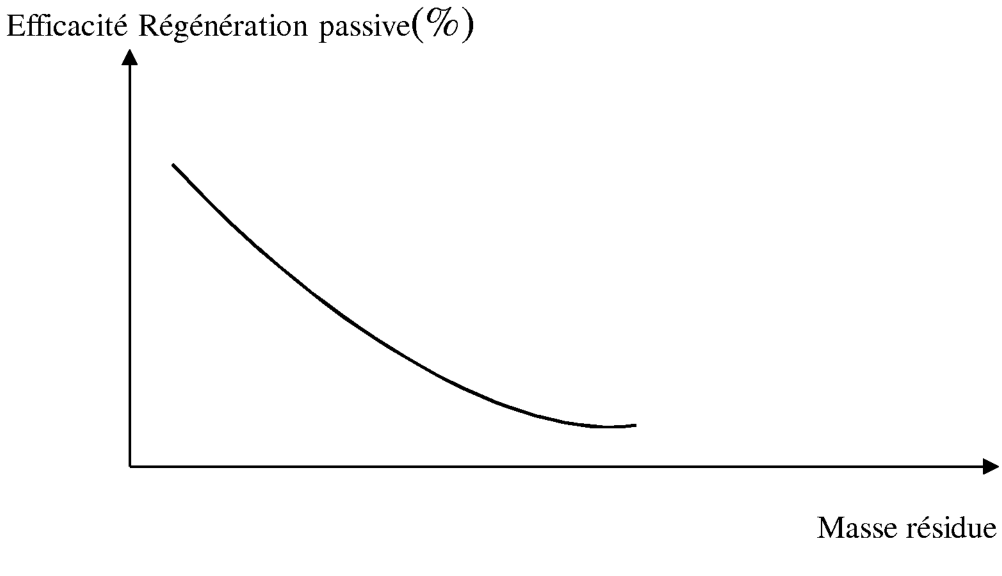
Efficacité Régénération passive(%)
Masse résidue

Office européen des brevets

# RAPPORT DE RECHERCHE EUROPEENNE

Numéro de la demande
EP 08 30 0232

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DE 10 2005 000978 A1 (SIEMENS AG [DE]) 20 juillet 2006 (2006-07-20) * le document en entier * ----- | 1-10 | INV. F01N3/023 F01N9/00 |
| A | WO 01/80977 A (BOSCH GMBH ROBERT [DE]; MAHR BERND [DE]) 1 novembre 2001 (2001-11-01) * abrégé * * page 12, alinéa 4 - page 13, alinéa 1; figure 1 * ----- | 1-10 | |
| A | JP 58 062309 A (TOYOTA MOTOR CO LTD) 13 avril 1983 (1983-04-13) * abrégé * ----- | 1,6 | |
| A | DE 101 48 915 A1 (VOLKSWAGEN AG [DE]) 6 mars 2003 (2003-03-06) * colonne 4, ligne 10 - ligne 21; figure * ----- | 1,6 | |
| A | EP 1 739 291 A (PEUGEOT CITROEN AUTOMOBILES SA [FR]) 3 janvier 2007 (2007-01-03) * abrégé * ----- | 1,6 | DOMAINES TECHNIQUES RECHERCHES (IPC): F01N |

Le présent rapport a été établi pour toutes les revendications

| Lieu de la recherche | Date d'achèvement de la recherche | Examinateur |
|---|---|---|
| Munich | 25 août 2008 | Torle, Erik |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

2
EPO FORM 1503 03.82 (P04C02)

**ANNEXE AU RAPPORT DE RECHERCHE EUROPEENNE RELATIF A LA DEMANDE DE BREVET EUROPEEN NO.** EP 08 30 0232

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-08-2008

| Document brevet cité au rapport de recherche | Date de publication | Membre(s) de la famille de brevet(s) | Date de publication |
|---|---|---|---|
| DE 102005000978 A1 | 20-07-2006 | AUCUN | |
| WO 0180977 A | 01-11-2001 | DE 10020555 A1 | 31-10-2001 |
| JP 58062309 A | 13-04-1983 | AUCUN | |
| DE 10148915 A1 | 06-03-2003 | AUCUN | |
| EP 1739291 A | 03-01-2007 | AT 377143 T | 15-11-2007 |
| | | DE 602006000192 T2 | 17-04-2008 |
| | | ES 2294774 T3 | 01-04-2008 |
| | | FR 2887293 A1 | 22-12-2006 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2781251
- EP 1281843 A
- FR 2877393